# EUROPEAN PATENT APPLICATION

(11) **EP 1 653 435 A1**
(43) Date of publication of application: **03.05.2006**
(21) Application number: 04388071.5
(22) Date of filing: 26.10.2004
(51) Int. Cl.: G09G 3/34, G02F 1/13357, F21V 14/00

(54) **Backlight unit for display device**

(71) Applicant: Sony Ericsson Mobile Communications AB, 221 88 Lund (SE)
(72) Inventor: Berger, Magnus, 224 64 Lund (SE)
(74) Representative: Boesen, Johnny Peder

(57) **Abstract**

Electronic equipment such as CD or MP3 players, PDAs, organizers, mobile phones often contains a backlight display unit (10) which can be relatively power or energy consuming. This invention is related to reducing the power consumption of such backlight display units (10). This is performed by dividing the area of the backlight unit (10) up into segments (20a; 20b; 20c), where the intensity of light backlighting each such segment can be controlled separately. Thus, depending on the mode or application of the electronic equipment (100), only some parts of the display unit (10) are to be backlit, thereby reducing the energy consumption of the display unit (10) as a whole.

## Description

### Field of the invention

This invention relates to an electronic equipment comprising a display unit with an area and one or more light emitting elements arranged to backlight the area of the display unit. The invention moreover relates to a display unit with an area and one or more light emitting elements arranged to backlight the area of the display unit. Finally, the invention relates to a method of controlling a backlight display unit in an electronic equipment, said backlight display unit having an area and comprising one or more light emitting elements arranged to backlight the area of the display unit and a computer program product comprising software code portions for performing said method.

### Background of the invention

Current portable or mobile electronic equipment such as laptops, portable CD or MP3 players, organizers, PDAs, mobile phones, etc., typically comprise a rechargeable or exchangeable battery as the energy source. Moreover, such electronic equipment often comprise a backlight display unit. A backlight display unit can be any type of display provided with one or more light emitting elements lighting up the display, e.g. from the side, above and/or behind the display as seen from a user. Typically, the backlight display unit comprises a white diffusion panel between the display and the light emitting element(s) for redirecting and scattering the light evenly to ensure a uniform lighting of the display. The display could be any type of liquid crystal display (LCD), e.g. TFT, STN, and the lighting elements could be any suitable elements, such as fluorescent tubes or light emitting diodes (LEDs), dependent on the type and size of the display. The lighting elements in backlight display units are relatively power consuming; thus the power consumption of the backlight display unit influences the lifetime of batteries in an electronic equipment considerably and thus the frequency of replacing or recharging said batteries.

### Object and summary of the invention

It is therefore an object of the invention to provide a backlight display unit with reduced power consumption in comparison with the current backlight display units.

This object is achieved when the display of the opening paragraph is characterized in that the area of said display unit is arranged to be divided up into segments and that each of said segments is arranged to be backlit at a specific controlled intensity of light. Hereby, the different segments of the area of the display can be backlit with light of different intensities; thus some of said segments can be backlight with light of a lower intensity compared to normal display units with a uniform light distribution and thus the energy consumption of the display unit and thereby of the electronic equipment can be reduced.

In a preferred embodiment, the intensity of the one or more light emitting elements can be controlled for backlighting said segments at said specific controlled intensities of light. In another preferred embodiment, the display unit comprises a light guiding means arranged to redirect and scatter the light emitted from said light emitting elements to specific segments of the backlight display unit. Hereby, two alternative ways of controlling the backlighting of the display unit is provided. Both render it possible to reduce the power consumption of the display unit and thus of the electronic equipment considerably. The light guiding means could be e.g. a diffusion panel or a light guide.

In yet a preferred embodiment, segments of said area of said display unit, in which segments information of relevance for a current application of the electronic equipment is presented, are backlit with light of higher intensity than remaining segments of the display unit. This could be implemented by backlighting those segments not having relevant information with light of a lower intensity or possibly with no light at all so that those segments not having relevant information are marked more weakly. Hereby, in addition to a reduction in power consumption, such a marking of some segments of the display unit comprising relevant information can be used in guiding and/or supporting a user of the electronic equipment, e.g. through menus. Other advantageous applications of the backlight of different segments with different intensities of light are the possible reception of light messages comprising lightning effects, personalization of the display, effects during the playing of games by means of the electronic equipment, and entertainment or amusement in general.

Of course, the area of the display unit can be arranged to be divided up into segments in a plurality of ways, so that a particular division into segments can be chosen in dependence of an application of the electronic equipment. Thus, if the electronic equipment is a unit comprising a MP3 player, a segment of the area of the display comprising information regarding e.g. the play back of a piece of music, could be lit with a normal intensity of backlight, whereas the remainder of the area of the display is lit at a lower intensity of light or at no backlight at all.

In a preferred embodiment the electronic equipment is a mobile phone.

The invention moreover relates to a display unit, a method and a computer program product, the advantages of which correspond to the advantages of the method as described above.

It should be noted that throughout this specification the term "backlight display unit" is meant to cover any type of display provided with one or more light emitting elements lighting up the display. Moreover, the backlight display unit typically comprises a diffusion panel or light guide between the display and the light emitting element(s). The display can be any type of display, e.g. liquid crystal display (LCD), such as a TFT or STN display, and the lighting elements could be any suitable elements, such as fluorescent tubes or light emitting diodes (LEDs), dependent on the type and size of the display.

It should be emphasised that the term "comprises/comprise" when used in this specification is taken to specify the presence of stated features, integers, steps or components but does not preclude the presence or addition of one or more other features, integers, steps, components or groups thereof.

### Brief description of the drawings

The invention will be explained more fully below in connection with examples of preferred embodiments and with reference to the drawing, in which:
Fig. 1 shows an electronic equipment with a display unit;
Fig. 2 shows a cross section through a backlight display unit; and
Figs. 3a to 3b show different divisions of the area of the display unit up into segments.

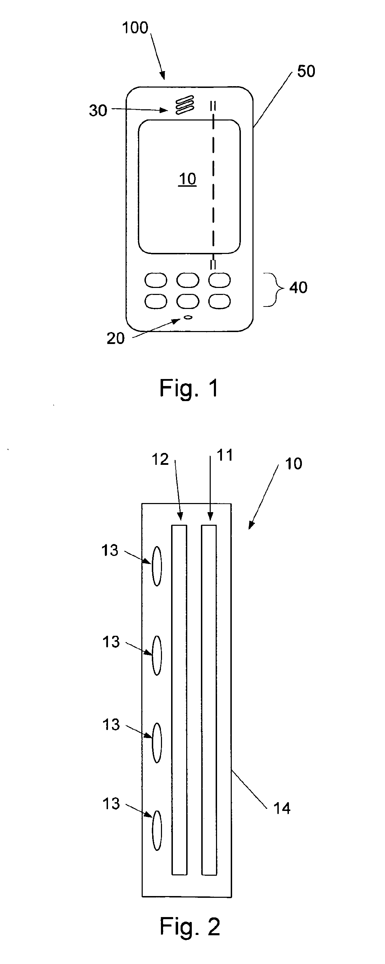

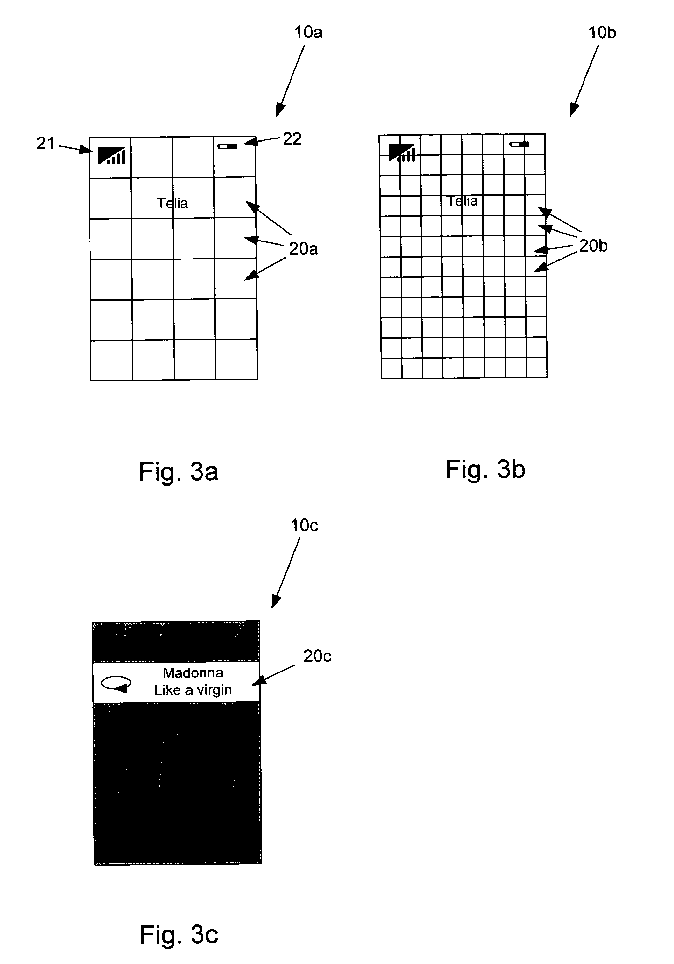

Throughout the Figures, like reference numbers denote like elements. It should be noted that the figures are not drawn to scale. Fig. 2 is an enlarged view compared to Fig. 1, and Figs. 3a to 3c are enlarged in comparison with Fig. 1 but in a reduced view compared to Fig. 2.

### DESCRIPTION OF PREFERRED EMBODIMENTS

Fig. 1 shows an electronic equipment 100 with a display unit 10. The electronic equipment in Fig. 1 is a mobile phone with a housing 50. The electronic equipment moreover comprises a microphone 20 and a loudspeaker 30 as well as input means, such as keys of a key board or key pad 40. The number of keys shown is exemplary only; other numbers of keys are conceivable, such as 10 keys representing each of the numbers from 0 to 9 plus possibly some function keys, such as representing "on/off', "status", etc. Moreover, any other input means could be part of the mobile phone, such as a jog ball, a joy stick, soft keys, etc. Finally, the electronic equipment 100 contains a display unit 10. The housing 50 is provided with suitable openings at appropriate placement for the display unit 10, the microphone 20, the loudspeaker 30 and the key pad 40.

Fig. 2 shows a cross section through a display unit 10, corresponding to a section through the display unit 10 shown in Fig. 1 along the line II-II in Fig. 1. It should be noted that Fig. 1 and Fig. 2 are not to scale and that the thickness of the backlight display unit 10 in Fig. 2 is exaggerated compared to the height of the display unit 10 for the sake of clarity. Moreover, it should be noted that Fig. 2 shows the display unit 10 seen from the side, and that the part of the display unit 10 seen to the right is the part facing outwards (to be seen by a user) when the display unit is mounted in an electronic equipment.

The display unit 10 comprises a display element 11 with pixels (not shown) that can be activated separately to either block backlight or let it pass through to light up particular colour filters. The display element 11 typically has many thousands pixels that are activated or not, making them reflect light to form images. The display element 11 could e.g. be a liquid crystal display (LCD) of any appropriate type, such as a Thin Film Transistor display (TFT display), Super Twisted Nematic display (STN display), a Colour STN display (CSTN display).

The display unit 10 moreover comprises a number of light emitting elements; in Fig. 2 is shown four light emitting elements 13. The light emitting elements 13 could be any suitable elements, such as fluorescent tubes, an electroluminescent (EL) panel or light emitting diodes (LEDs), dependent on the type, size and the contemplated use of the display. Moreover, the number of light emitting elements 13 could be any appropriate number, between one and tens or hundreds of light emitting elements. The light emitting elements could preferably be of a type in which the intensity of the light can be controlled. Thus, the light emitting elements 13 can be controllable to backlight specific segments (not shown in Fig. 2) of the display unit 10 at controlled intensities of light. The four light emitting elements 13 in Fig. 2 could typically correspond to four different segments of the display 10 (corresponding to four parts of the display element 11), so that the four different segments of the display can be backlit at controlled light intensity independently of the backlighting of the remaining segments by controlling the intensity of light emitted from the light emitting element 13. For example, in the case where the area of the display unit 10 is divided up horizontally into four segments and where the light emitting elements 13 consist of four horizontally oriented light tubes, the upper segment of the area of the display unit 10 can be backlit by letting the upper light tube 13 emit light, whilst the remaining light tubes are turned off so as to not emit light and thus not consume any power. In general, if only some of the segments of the display unit 10 e.g. are backlight at normal intensity and the remaining segments are backlight at reduced or no intensity, a reduction in the power consumption of the display unit 10 is obtained due to the reduction of the overall intensity of the backlighting.

Such a controlled backlighting of different segments of the display unit 10 is preferably linked to the information shown on the display unit 10 so that e.g. segments of the display unit 10 in which relevant information is displayed are backlit, whilst other segments without relevant information are backlit with reduced intensity or not backlit at all. The term "relevant information" is meant to cover information regarding the current use or application of an electronic equipment in which the display unit 10 is integrated or mounted. Such relevant information could be information regarding a piece of music (e.g. name of artist and of the piece of music, etc.), in a case wherein the electronic equipment is used as e.g. an MP3 player. This will be explained in more detail below in connection with the Figs. 3a to 3c.

Typically, the display unit 10 moreover contains light guiding means 12, e.g. a diffusion panel or a light guide, between the display element 11 and the light emitting elements 13 for redirecting and scattering the light evenly to ensure a uniform lighting of the display. It is conceivable that the diffusion panel or light guide 12 can be arranged to direct the light to certain segments of the display element 11 so that the light from one or more light emitting elements 13 can be directed to a controlled number of segments of the display 10. Thus, the light from two or more different light emitting elements 13 could be directed to the same segment(s) of the display unit 10 for providing backlight of a higher intensity compared with the case where each segment is backlit with light from only one light emitting element 13. Hereby, the intensity of light at the backlit element(s) is increased (in comparison with the case wherein a segment is backlit by means of only one light emitting element) or the intensity of light from each of the light emitting elements 13 backlighting said segment can be reduced without reducing the intensity of backlight to said segment (compared to the case wherein a segment is backlit by means of only one light emitting element).

In the above it is described that the reduction in power consumption of a backlight display unit can be achieved by controlling the light emitted from specific light emitting elements or by controlling a light guiding means that directs light from the light emitting elements towards the display element. It should be noted that these two approaches of course can be combined.

Even though Fig. 2 shows the backlight display unit 10 as enclosed in a housing 14, it is also conceivable that the elements of the unit are detached elements arranged to be assembled so that the housing 14 is dispensable or superfluous.

Figs. 3a to 3b show different divisions of the area of the display unit 10 up into segments. In Figs. 3a to 3c, the display unit 10 is seen from the front, i.e. from the side that is intended to be looked at by a user when the display unit 10 is integrated or mounted in an electronic equipment. As noted above, the electronic equipment in which the display unit 10 could be integrated/mounted could be a mobile phone, which has a variety of applications in excess of telephone conversation applications, such as MMS/SMS, camera, games, organizer, telephone book applications, etc. Typically, each such application is associated with a variety of modes, menus or images to be displayed on the display unit 10, where each such mode/menu/image can be associated with the display of information on predetermined segments of the area of the display unit 10.

In Fig. 3a the area of the display unit 10a is divided up into 6 rows of 4 segments 20a, in total 24 segments 20a, and in Fig. 3b the area of the display unit 10b is divided up into 12 rows of 8 segments 20b, in total 96 segments 20b. According to the invention, the intensity of light backlighting each of the segments 20a or 20b can be controlled, either by controlling the intensity of different light emitting elements backlighting the display unit 10a, 10b, by controlling light guiding means between the light emitting elements and the display element 11 (fig. 2) or a combination of both. The electronic equipment (not shown in Figs. 3a to 3c) in which the display unit is integrated/mounted is arranged to control the intensity of backlighting of the segments 20a, 20b in accordance with the state/mode of the electronic equipment, e.g. any application executed on the electronic equipment. In Fig. 3a, the display unit 10a presents a symbol 21 relating to the quality of connection of the electronic equipment to a communication network and a symbol 22 relating to the charge of a (rechargeable) battery of the electronic equipment. Moreover, the name "Telia" is presented, being an example of a telecommunication network to via which the electronic equipment can communicate with other electronic equipment. This information shown in Fig. 3a and 3b, respectively, could correspond to a stand-by mode of the electronic equipment comprising the display unit 10a and 10b, respectively. In this case, where relevant information is only shown in some segments of the area of the display unit 20a, 20b, it would be expedient that only some of the segments are backlit, e.g. the two upper rows in Fig. 3a or the four upper rows in Fig. 3b.

It should be noted that the term "area of the display unit 10" is meant to cover the physical area of the part of the display unit 10 arranged to face towards a user when mounted in a electronic equipment. In Figs. 3a and 3b, respectively, the area of the display units equals the area of the 24 segments 20a and the 96 segments 20b, respectively.

Fig. 3c shows information presented on a display unit 10c mounted or integrated in an electronic equipment (not shown in Fig. 3c) that executes a music playback application. Only one part 20c of the area of the display unit 10c is backlit, whilst the remainder of the area of the display unit is not backlit; this is shown by the darkness of the remainder of the area of the display unit in Fig. 3c. The backlit part 20c of the area of the display unit 10c could be constituted by a single segment or by a plurality of segments, e.g. a plurality of segments 20a or 20b as seen in Fig. 3a or 3b.

In the above, it is described how controlling the intensity of backlight of specific segments of a display unit is useful in reducing the power consumption of the display unit. However, it should be noted that such a control of the backlighting has other useful effects, such as support for guiding a user in menus by highlighting certain areas of the display unit (in comparison with the remainder of the area of the display unit), creating different light effects for different modes of the electronic equipment (e.g. for incoming calls, etc.).

The term "electronic equipment" includes portable radio communication equipment. The term portable radio communication equipment includes all equipment such as mobile telephones, pagers, communicators, i.e. electronic organizers, smartphones or the like.

## Claims

1. An electronic equipment (100) comprising a backlight display unit (10) with an area and one or more light emitting elements (13) arranged to backlight the area of the backlight display unit (10), **characterized in that** the area of said backlight display unit (10) is arranged to be divided up into segments (20a; 20b; 20c) and that each of said segments (20a; 20b; 20c)is arranged to be backlit at a specific controlled intensity of light.

2. An electronic equipment (100) according to claim 1, **characterized in that** the intensity of the one or more light emitting elements (13) can be controlled for backlighting said segments (20a; 20b; 20c) at said specific controlled intensities of light.

3. An electronic equipment (100) according to claim 1or 2, **characterized in that** the backlight display unit (10) comprises a light guiding means (12) arranged to redirect and scatter the light emitted from said light emitting elements (13) to specific segments of the backlight display unit (10).

4. An electronic equipment (100) according to any of the claims 1 to 3, **characterized in that** segments of said area of said backlight display unit (10), in which segments information of relevance for a current application of the electronic equipment is presented, are backlit with light of higher intensity than remaining segments of the backlight display unit (10).

5. An electronic equipment (100) according to any of the claims 1 to 4, **characterized in that** the electronic equipment is a mobile phone.

6. A backlight display unit (10) with an area and one or more light emitting elements (13) arranged to backlight the area of the backlight display unit (10), **characterized in that** the area of said backlight display unit (10) is arranged to be divided up into segments (20a; 20b; 20c) and that each of said segments (20a; 20b; 20c) is arranged to be backlit at a specific controlled intensity of light.

7. A backlight display unit (10) according to claim 6, **characterized in that** the intensity of the one or more light emitting elements (13) can be controlled for backlighting said segments (20a; 20b; 20c) at said specific controlled intensities of light.

8. A backlight display unit (10) according to claim 6 or 7, **characterized in that** the backlight display unit (10) comprises a light guiding means (12) arranged to redirect and scatter the light emitted from said light emitting elements (13) to specific segments (20a; 20b; 20c) of the backlight display unit (10).

9. A backlight display unit (10) according to any of the claims 6 to 8, **characterized in that** segments of said area of said backlight display unit, in which segments information is presented, are backlit with light of higher intensity than remaining segments of the backlight display unit (10).

10. A backlight display unit (10) according to any of the claims 6 to 9, **characterized in that** the backlight display unit (10) is comprised in a mobile phone.

11. A method of controlling a backlight display unit (10) in an electronic equipment (100), said backlight display unit (10) having an area and comprising one or more light emitting elements (13) arranged to backlight the area of the backlight display unit (10), **characterized in** comprising the steps of:
dividing the area of the backlight display unit (10) up into segments (20a; 20b; 20c), and
backlighting each of said segments (20a; 20b; 20c) at a specific controlled intensity of light.

12. A method according to claim 11, **characterized in that** the step of backlighting each of said segments (20a; 20b; 20c) at a specific controlled intensity of light is performed by controlling the intensity of the one or more light emitting elements (13).

13. A method according to claim 11 or 12, **characterized in that** the step of backlighting each of said segments (20a; 20b; 20c) at a specific controlled intensity of light is performed by controlling said light guiding means (12) to redirect and scatter the light emitted from said light emitting elements (13) to specific segments of the backlight display unit (10).

14. A method according to any of the claims 11 to 13, **characterized in that** the step of backlighting each of said segments (20a; 20b; 20c) at a specific controlled intensity of light comprises backlighting segments of said area of said backlight display unit (10), in which segments information of relevance for a current application of the electronic equipment is presented, with light of higher intensity than remaining segments of the backlight display unit (10).

15. A method according to any of the claims 11 to 14, **characterized in that** said electronic equipment (100) is a mobile phone.

16. A computer program product directly loadable into an internal memory of an electronic equipment, comprising software code portions for performing the steps of claims 11 to 15, when said product is executed on an electronic equipment (100).
